# EUROPEAN PATENT SPECIFICATION

(11) **EP 0 428 510 B1**
(45) Date of publication and mention of the grant of the patent: **07.05.1997**
(21) Application number: 88908015.6
(22) Date of filing: 09.08.1988
(51) Int. Cl.: C08F 267/04, B32B 27/32

(54) **MALEIC ANHYDRIDE GRAFT COPOLYMER PRODUCTS HAVING LOW YELLOWNESS INDEX AND PREPARATION**
MALEINSÄUREANHYDRID PFROPF-COPOLYMER-ERZEUGNISSE MIT NIEDRIGEM GELBINDEX UND VERFAHREN ZUR HERSTELLUNG
PRODUITS COPOLYMERES GREFFES D'ANHYDRIDE D'ACIDE MALEIQUE AYANT UN FAIBLE INDICE DE JAUNE, ET PREPARATION

(43) Date of publication of application: 29.05.1991
(73) Proprietor: THE DOW CHEMICAL COMPANY, Midland, Michigan 48640 (US)
(72) Inventor: STRAIT, Chad, A., Lake Jackson, TX 77566 (US); TABOR, Ricky, L., Lake Jackson, TX 77566 (US); LANCASTER, Gerald, M., Freeport, TX 77541 (US)
(74) Representative: Burford, Anthony Frederick
(86) International application number: PCT/US88/02702
(87) International publication number: WO 90/01504

(56) References cited:
- EP-A- 0 286 734
- US-A- 3 868 433
- US-A- 3 882 194
- US-A- 4 028 436
- US-A- 4 506 056
- US-A- 4 684 576
- US-A- 4 751 270
- US-A- 4 753 997
- US-A- 4 762 890

## Description

This invention relates to a novel process of grafting maleic anhydride, to polymers using novel polymer extruding equipment and novel products produced therefrom. Such products when blended with a synthetic resin can be coextruded into multilayer films suitable for the packaging of food products.

Blends of maleic anhydride graft copolymers and polyolefins have a broad range of applications, including use as a component in food packaging films and pipe coatings.

Processes for grafting an ethylenically unsaturated monomer such as maleic anhydride onto olefinic polymers are well documented in the art. Typically, the processes involve reacting maleic anhydride with molten olefinic polymer under conditions of high shear. A wide range of mixing devices are generally described as being suitable. However, the only actual working example including the use of a multiple screw extruder is found in Example 1 of commonly assigned US-A-4,684,576, relating to the preparation of precursor grafted polymer that is thereafter blended with other polyolefins to give a blended product that is adhesive. That example does not inherently make, disclose or suggest the critical conditions now found to be necessary to produce a grafted product suitable for food packaging films which require absence of odor. low grain content and non-yellow color

Products obtained from prior art extruder processes are not suitable for use in food packaging films for three major reasons:
1) Odor. Incorporation of monomer in the graft copolymer in the prior art processes is extremely low. Generally the graft copolymer contains less than 0.50 weight percent maleic anhydride. Such graft copolymers contain a significant amount of residual monomer and other impurities which in turn impart to resulting films an extremely unpleasant odor. Such films are unacceptable therefore for use as food packaging material.
2) High Grain Content. Grain, defined as globular masses discrete from the polymer per se having a diameter between 5 and 15 mils (125-375 µm), has long been recognized as adversely affecting clarity and gloss of extruded films. Howells and Benbow. "Flow Defects in Polymer Melts", Trans. J. Plast. Inst. 30 (1962) 240-253, conclude that grain formation is attributed to intermolecular chain entanglement during the extrusion process and that such entanglement can be reduced but not eliminated by shearing. In general. the higher the degree of such chain entangling, the greater the quantity of grain in the extruded film and thus the hazier the film. Films comprising the graft copolymers of the prior art have high levels of grain and thus are not desirable in food packaging applications.
3) Yellowness. Films produced from the graft copolymers of the prior art further have the undesirable feature of yellow discoloration, aesthetically unacceptable to consumers and thus impractical for food packaging applications.

It would be advantageous to devise a procedure for producing a maleic anhydride graft copolymer which, when blended with a polyolefin, would render a film suitable for use as a food packaging material. In particular, it would be desirable to produce a graft copolymer containing greater than 0.50 weight percent incorporated maleic anhydride with a low yellowness index which, when blended with a polyolefin, renders a film with low grain content.

US-A-4751270 discloses that the odor and discoloration of maleic acid-modified polyolefin can be reduced by using a diphenylethane derivative instead of peroxide as free radical initiator in the graft polymerization of maleic anhydride to polyolefin. It is stated that the graft polymerization can be carried out in a conventional melting and kneading device such as a single-axis extruder. There is no suggestion that the device should be such as to provide a pressurized section filled with molten polymer or that the maleic anhydride and free radical initiator should be injected into that section.

EP-A-0286734 (published 19th October 1988) discloses linear low density polyethylene grafted with one or more carboxyl compounds and one or more vinylaromatic compounds. Exemplified carboxyl-containing compounds include maleic anhydride. The graft polymerization is conducted in a reaction device exerting a strong shearing effect. Exemplified devices include Brabender kneaders and single or twin-screw extruders. The carboxyl-containing compound can be injected into the extruder together with the vinylaromatic compound and a solvent at a location where the polyethylene is molten. In all exemplified methods, peroxide is used as a free radical initiator and is supplied with the polyethylene feed. There is no disclosure of the reaction device having a pressurized polyethylene-filled section and no suggestion that odor or yellowness could be controlled by the manner in which materials are added to the extruder.

US-A-3882194 discloses the preparation of a graft copolymer by extruding a mixture of a polyolefin, an ethylenically unsaturated acid anhydride, and an ethylenically unsaturated ester. Specified acid anhydrides include maleic anhydride. The graft polymerization can be conducted in a conventional single or multiple screw extruder. In the only exemplified method using maleic anhydride, it is premixed with polyethylene and acetone and fed to a corotating twin-screw extruder having five heating zones. Dibutyl maleate and peroxide initiator are added to the second zone. In another exemplified method, ethylene-hexene copolymer is fed to the extruder and an acid anhydride added with dibutyl maleate and the peroxide to the second and third zones. There is no suggestion in D3 that the manner of addition of the acid anhydride could control odor and discoloration.

In accordance with a first broad aspect of the present invention, there is disclosed a method for grafting maleic anhydride to polymers, including the steps of;
(a) feeding the polymer, maleic anhydride and a free radical initiator to a multiple screw extruder;
(b) melting the polymer by heating and shearing in the extruder; and
(c) thereafter mixing the molten polymer and maleic anhydride in the extruder for sufficient time to graft at least part of the maleic anhydride to the molten polymer;
characterized in that the maleic anhydride and free radical initiator are injected into a section of the multiple screw extruder which is pressurized and wherein the flights of the screw and substantially all voids in the section are filled with molten polymer. The maleic anhydride and the free radical initiator are preferably mixed in a solvent system prior to injection into the extruder. Devolatilization of the graft copolymer preferably occurs in one or more decompression sections of the extruder.

In a second broad aspect of this invention there is disclosed a graft copolymer composition comprising the reaction product of maleic anhydride and a backbone polymer in the presence of an alkyl or dialkyl peroxide as free radical initiator and having a Yellowness Index as measured according to ASTM D-1925 of less than 10.0, characterized in that between 0.50 and 2.0 weight percent of said graft copolymer comprises maleic anhydride and the composition is obtainable by the method of the invention.

In a third broad aspect of this invention, there is disclosed a multilayer coextruded film used for packaging foods containing at least two layers wherein at least one layer comprises a blend of (a) between 1.5 to 75.0 weight percent of said graft copolymer of the second aspect and, (b) between 25.0 to 98.5 weight percent polyolefin.

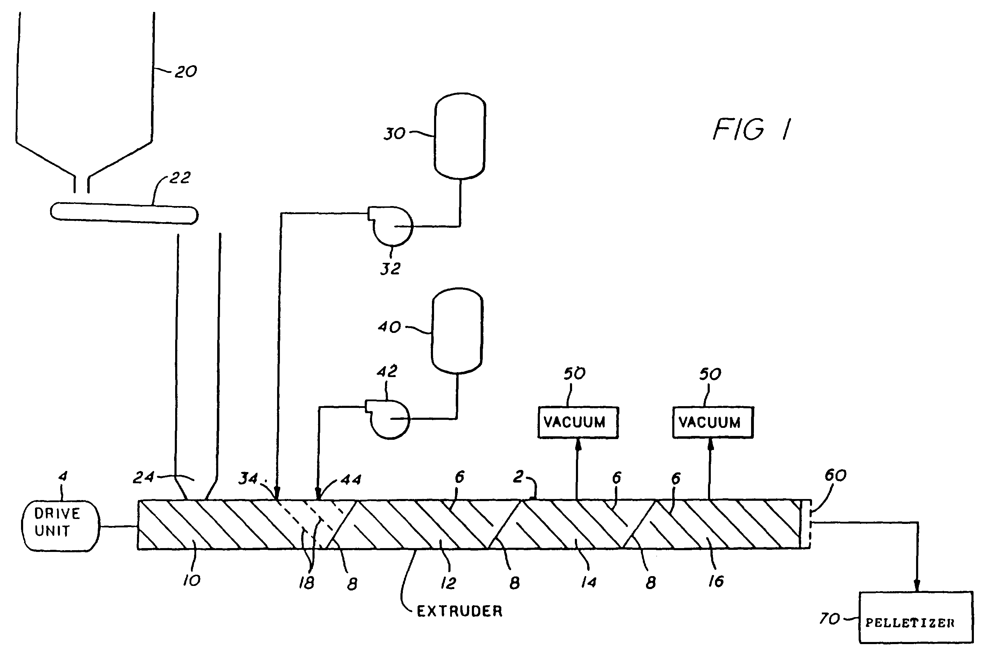

Figure 1 is a schematic drawing of a preferred apparatus for grafting maleic anhydride to polymers.

The present invention is directed towards an extrusion process of grafting maleic anhydride onto a polymer backbone. The resulting novel graft copolymer has a yellowness index as measured in accordance with ASTM D-1925-70 and ASTM E-313-73 less than 10 and 11, respectively, and has particular applicability as a component in a multilayer extruded film; the latter being particularly useful as a food packaging material.

The graft copolymer of this invention preferably is manufactured in a multiple screw extruder comprising positive and negative conveyance screw elements, and lobed kneading/mixing plates, paddles or blocks. In general, positive conveyance screw elements convey the polymer-maleic anhydride stream away from the first zone of the extruder (wherein the polymer, maleic anhydride and initiator are initially received and mixed) and towards the latter zones of the extruder (wherein the polymer is devolatilized and discharged from the extruder). Negative conveyance screw elements attempt to force the stream away from the last zone and towards the first zone. It is the negative conveyance screw elements which act to backup polymer or fill the extruder region located upstream of them. In essence, any multiple screw extruder containing screw elements with similar means as those described herein may be employed. Such screws could conceivably counter-rotate to each other.

A representative example of a suitable multiple screw extruder for use in this invention is the fully intermeshing co-rotating twin screw extruder, schematically illustrated in Fig. 1. The term "co-rotating" means that all of the screw elements rotate in the same direction at the same rate of revolution. The invention will be described with reference to this figure although it is understood that any multiple screw extruder containing similar means as those discussed above may be employed.

Drive unit 4 rotates positive conveyance elements 6, negative conveyance elements 8, and mixing/kneading paddles or blocks 18 within the extruder barrel 2. The positive conveyance elements 6 generally convey material within the extruder barrel 2 from left to right on Figure 1. The negative conveyance elements 8 momentarily retard the movement of the material causing the material to backup and fill a portion of the extruder barrel 2 upstream of that negative conveyance element 8. The negative conveyance elements 8 divide the extruder barrel 2 into four separate zones 10, 12, 14, 16. A first zone 10 includes positive conveyance elements 6 and mixing type elements 18 for receiving and mixing a polymer, maleic anhydride, and a free radical initiator. A second zone 12 contains positive conveyance elements 6 and further mixes the polymer by shearing action while grafting occurs. If additional mixing or residence time is desired, negative conveyance 8, or mixing/kneading paddles 18 may be substituted for some of the positive conveyance elements 6 in zone 12 of the extruder. A third zone 14 and a fourth zone 16 contain positive conveyance elements 6 and are provided to devolatilize the polymer as described more fully below.

A base or backbone polymer is fed in pellet form from a feed hopper 20 to a feed metering conveyer 22 and then to a feed inlet 24 in the extruder barrel 2. The feed inlet 24 is positioned near the beginning of the first zone 10 within the extruder barrel 2. The backbone polymer can include, but is not limited to, (i) a polyolefin such as polypropylene, poly (4-methylpentene), high density polyethylene, "HDPE" (densities from 0.940 gram/cm³ to 0.965 grams/cm³), low density polyethylene, "LDPE". The principal distinctions of such polymers are well known to those skilled in the art and are fully described in US-A-4,327,009; (ii) linear low density polyethylene, "LLDPE" (densities from 0.870 grams/cm.³ to 0.939 grams/cm³), or linear copolymers of ethylene and α-olefins having between 3 to 10 carbon atoms such as 1-octene; (iii) copolymers of ethylene and carbon monoxide; and (iv) copolymers of ethylene and an ethylenically unsaturated carboxylic acid or derivative including, but not being limited to, those selected from acrylic acid, methacrylic acid, alkylacrylates (such as ethylacrylate and butyl acrylate) and vinyl acetate.

The extruder barrel 2 is heated, preferably by clamped-on electric elements, or cooled, preferably by circulating water, to control the temperature of the polymer. The temperature within each of the four zones 10, 12, 14, 16 is independently controlled to obtain the desired temperature profile, even when processing polymers having different melt characteristics.

Maleic anhydride and a free radical initiator are injected into the polymer filled, pressurized section of the extruder barrel 2, preferably at the mixing elements 18 at the end of the first zone 10. As used herein, the phrase "polymer filled" when used in reference to the extruder refers to that section wherein the flights of the screw and substantially all voids in the region are essentially filled with polymer. Further the term "pressurized section" when used in reference to the extruder refers to that area under pressure from polymer flow and filled with polymer such that substantially no gaseous voids exist and further is sealed to such an extent that any solvent pumped into the area is substantially maintained below its vaporization point. The negative conveyance element 8 at the end of the first zone 10 keeps the mixing elements 15 filled with polymer and improves mixing.

Suitable free radical initiators include, but are not limited to, alkyl and dialkyl peroxides such as tertiary-butyl peroctoate (2-ethyl hexanoate) or 2,5-dimethyl-2,5-di(t-butylperoxy)hexyne-3. Initiators having higher stabilities are preferred.

The maleic anhydride is preferably mixed in a non-reactive solvent such as ketones (especially methyl ethyl ketone or acetone), benzene, alkyl acetates, or chlorinated benzenes and stored in a maleic anhydride feed tank 30. The maleic anhydride can be dissolved in the solvent up to its saturation level. Further, the free radical initiator can be mixed with the maleic anhydride during storage or injected into the extruder barrel 2 separately. The maleic anhydride and solvent solution is pumped from the storage tank 30 by a metering pump 32 and is injected into the first zone 10 through an injection nozzle 34. If the free radical initiator is added separately or if additional initiator is required. the free radical initiator can be stored in a solvent solution in a second storage tank 40 and pumped by a second metering pump 42 for injection into the first zone 10 through a second injection nozzle 44. The amount of initiator used does not appear to be critical and ratios of maleic anhydride to initiator of from 1/.015 to 1/.1 by weight have been found to be satisfactory, with ratios from 1/.025 to 1/.035 being preferred.

The temperature of the polymer in the first zone 10 will normally be below its melting point, and the polymer temperature in the second zone 12 must be high enough to keep the polymer in its molten state. Independent temperature control for each zone is desired because the polymers generally experience an increase in viscosity as maleic anhydride is grafted to the polymers. High melt temperatures, e.g. greater than 250°C, may require a more stable initiator than the ones mentioned above. Polymers having melt temperatures of 85°C to 190°C prior to feed injection have worked well when Lupersol 130 was used as the initiator.

The pressure in the first zone 10 is not critical. However, the area where the maleic anhydride is injected 34 into the extruder should be maintained at a pressure above the vaporization pressure of maleic annydride, preferably at 50 to 100 psig (350-700 kPag). The pressure in the third zone 14 and the fourth zone 16 must be sufficiently low to allow removal of solvent and unreacted maleic anhydride. Vacuum sources 50 are provided to reduce the pressure in the third and fourth zones 14 and 16, and a vacuum between 28 and 29.9 inches (71-76 cm) of mercury (94.8-101.3 kPa) has proven sufficient to remove most of the unreacted maleic anhydride.

The temperature of the graft copolymer during devolatilization is preferably kept between 160°C and 300°C to assist in devolatilization. Higher temperatures give lower volatile levels, but may lead to higher grain levels. Lower temperatures lead to higher volatile levels or more work input to remove the volatiles. but may result in lower grain levels. Temperatures of from 180°C to 260°C are preferred to give the best balance of devolatilization and grain level.

The graft copolymer exits the extruder barrel 2 through a die face 60 which produces strands of the graft copolymer. The polymer strands can then be sent to a strand chopper 70 to prepare polymer pellets for use in other processes. As an alternative, an underwater pelletizer may optionally be employed in place of strand chopper 70. Either of these techniques are commonly known to those well versed in the art.

A multiple screw extruder particularly suited for this invention is a commercially available Werner-Pfleiderer ZSK-53/5L co-rotating, twin-screw extruder. This extruder can graft maleic anhydride to the polymer backbone at rates from 40 pounds per hour to 160 pounds per hour (18-73 kg/h) with no significant change in percent conversion. Production rates of up to the maximum for this equipment (about 300 pounds per hour (136 kg/h)) can even be obtainable. The backbone is preferably metered into the polymer feed inlet at a low enough rate to starve the extruder at the operating speed prior to the addition of maleic anhydride and the free radical initiator. The average residence times within the extruder ranges from 140 seconds at 40 pounds per hour (18 kg/h) down to 45 seconds at 160 pounds per hour (73 kg/h) polymer rates. A similarly equipped extruder of larger diameter also gives an equivalent product at higher rates.

The above described method and apparatus has been used to graft maleic anhydride to polymers to produce graft copolymers having up to 2 percent by weight of maleic anhydride. The percent of incorporation of maleic anhydride is generally related to the ratio of maleic anhydride to polymer feed until about the level of maximum incorporation, generally about two percent. Preferred products generally incorporate from 0.3 percent to 1.5 percent maleic anhydride by weight, most preferably greater than 0.50 percent by weight, and most preferred greater than 0.75 percent by weight.

A conversion of 75 percent of the feed maleic anhydride to grafted maleic anhydride has been achieved for linear low density polyethylenes, and lower percent conversions are generally obtained for high density polyethylenes.

The graft copolymer produced from the process of this invention has improved color properties and when manufactured into a film improved grain properties. In particular. the yellowness index of a polymer according to the present invention as measured according to ASTM D-1925-70 is less than 10.0, and usually less than 8.75, and as measured in accordance with ASTM E-313-73 is generally less than 11.0, usually less than 8.75. Further, the whiteness index as measured according to ASTM E-313-73 preferably is greater than 45.0. In addition, when processed into films the blends of this invention comprising a polyolefin and graft copolymer preferably are characterized by a grain count of particle diameter size between 5 mils and 15 mils (125-375 µm) of less than 3,000 grains per 1,000 square inches (6 500 cm²) of 1.6 mil (40 µm) film. Such films have a highly glossy appearance and are suitable for use as a food packaging material in multilayer coextruded or laminated structures.

The polyolefin with which the graft copolymer of this invention is blended can be an ethylene homopolymer including LDPE and HDPE. In addition, suitable polyolefins for the production of films include polypropylene, poly (4-methyl pentene) and copolymers of ethylene and a C₃ to C₁₀ α-olefin, such as LLDPE, propylene and 1-butene, copolymers of ethylene and C₄-C₈ diolefins such as butadiene and copolymers of ethylene and an ethylenically unsaturated carboxylic acid or derivative such as vinyl acetate, acrylic acid, methacrylic acid, ethyl acrylate, butyl acrylate, methyl methacrylate, and methyl acrylate and copolymers of ethylene and carbon monoxide. The ratio of graft copolymer to polyolefin employed in the blend is generally between 1.5: 98.5 to 75:25 by weight, preferably 2.5:97.5 to 35:65 by weight, and most preferably 5.0:95 to 25:75 by weight.

The graft copolymer and polyolefin may be blended by methods known to one skilled in the art such as by use of a blender, mixer, kneader, roller, or extruder. Likewise, the production of multilayer films from such blends can be accomplished by techniques such as cast film, blown film, coextruded blow molding, coextruded sheeting, lamination or other techniques available to a skilled practitioner. The layers of such multilayer films (other than the layer comprising the blend of graft copolymer and polyolefin) may consist of such synthetic resins as polyamide (e.g. nylon), ethylene - vinyl alcohol copolymers, polyolefins (e.g. polypropylene or polyethylene) polyester, polycarbonate, and poly(vinylidene chloride), cellulose and derivatives thereof, and metals.

The following Examples 1-3 and part of Examples 8-12 provide details of making and using preferred graft copolymers by the method of the present invention. The following Comparative Examples 4-7, 13, and part of 8-12 are not prior art. They illustrate the surprising nature of the invention. In the examples and comparative examples, "melt flowability" represents the melt flow index as measured using ASTM D-1238, Standard Designation 190/10.0 (condition N). Yellowness index (A) was determined using ASTM D-1925-70. Whiteness Index and Yellowness Index (B) were determined using ASTM E-313-73.

### Example 1

A linear low density polyethylene sold under the trademark DOWLEX¹ LLDPE 2035, having a melt index of 6 dg/min and a density of 0.919 grams/cc, was fed into a Werner-Pfleiderer ZSK-53/5L co-rotating, twin-screw extruder operating at the following conditions:

| Zone | 1 | 2 | 3 | 4 |
|---|---|---|---|---|
| Barrel Temp. , °C | 215 | 228 | 233 | 235 |
| Melt Temp., °C | 135 | 200 | 210 | 240 |
| Screw Speed 200 rpm | | | | |
| Polymer Rate 150 lb/hr (68 kg/h) | | | | |

1 A trademark of The Dow Chemical Company. DOWLEX LLDPE 2035 is a copolymer of octene/ethylene.

A mixture of maleic anhydride/methyl ethyl ketone/LUPERSOL² 130 at a weight ratio of 1/1/0.03 was fed into the extruder through a Werner-Pfleiderer injection nozzle by a positive displacement metering pump at a rate of 2.24 pounds per hour (1.02 kg/h). The injection nozzle was located just upstream of a series of kneading blocks or mixing type elements backed by a negative conveyance element which kept the portion of the extruder from some point upstream of the injection nozzle to the negative conveyance screw element polymer filled and pressurized. A vacuum of 29 inches (74 cm) of mercury (98.2 kPa) was maintained on zones 3 and 4 to devolatilize the grafted polymer. The graft copolymer exhibited a maleic anhydride incorporation of 0.55 percent by weight of the grafted polymer.
2 A trademark of Penwalt for 2,5-dimethyl-2,5-di(tertiary butylperoxy)hexyne-3.

### Example 2

A high density polyethylene homopolymer sold as DOW HDPE 10062 having a melt index of 10 dg/min and a density of 0.962 g/cc was fed into the extruder of Example 1 under the following conditions:

| Zone No | 1 | 2 | 3 | 4 |
|---|---|---|---|---|
| Barrel Temp. , °C | 170 | 230 | 220 | 220 |
| Screw Speed 200 rpm | | | | |
| Polymer Rate 150 lb/hr (68 kg/h) | | | | |

A 45/55/0.032 (methyl ethyl ketone/maleic anhydride/LUPERSOL 130) solution was fed through the injection nozzle at a rate of 5.9 lb/hr (2.7 kg/h). The vacuum level at zones 3 and 4 was 29 inches (74 cm) mercury (98.2 kPa). The product contained 1.15% grafted maleic anhydride. This product was then blended with DOWLEX³ LLDPE 2035, a linear low density polyethylene (LLDPE) having a melt index of 6 dg/min and a density of 0.919 g/cc, at a ratio of 11.5/88.5 (88.5% LLDPE), melt blended in an extruder, and then co-extruded as the adhesive (middle) layer in a three layer film including high density polyethylene and nylon. The resulting film, when converted into bags, has excellent structural integrity and is suitable for heating contained foods in a microwave oven.
3 A trademark of The Dow Chemical Company. DOWLEX LLDPE 2035 is a copolymer of ocetene/ethylene.

### Example 3

A high density ethylene homopolymer sold as DOW HDPE 10062 having a melt index cf 10 dg/min. was fed into the extruder of Example 1 under the following conditions:

| Zone No. | 1 | 2 | 3 | 4 |
|---|---|---|---|---|
| Barrel Temp , °C | 102 | 201 | 201 | 221 |
| Screw Speed - 300 rpm | | | | |
| Polymer Rate - 200 lb/hr (90 kg/h) | | | | |

Methyl ethyl ketone, maleic anhydride and LUPERSOL 130 were fed through the injection nozzle at 3.4, 3.4 and 0.10 lb/h. (1.5, 1.5 and 0.05 kg/h), respectively. The injection nozzle was located just upstream of a series of kneading blocks or mixing type elements backed by a negative conveyance element which kept the entire injection area polymer filled and pressurized. The vacuum level at zones 3 and 4 was 29 inches (74 cm) mercury (98.2 kPa). The resulting product contained 1.02% incorporated maleic anhydride representing a conversion of 63.0% of the feed maleic anhydride to incorporated maleic anhydride.

The resulting graft copolymers exhibited the following properties:

| | |
|---|---|
| Melt Flowability | 9.8 |
| Whiteness Index | 49.94 |
| Yellowness Index (A) | 8.53 |
| Yellowness Index (B) | 8.69 |

### (Comparative) Examples 4-6

These examples demonstrate that higher yellowness and lower whiteness indices are obtained when the maleic anhydride and initiator are not injected into a polymer filled section of the extruder.

Into the polymer feed section of the extruder of Example 1 were added Dow HDPE 10062, maleic anhydride (MAH) and LUPERSOL 130. The extruder was operated at the following conditions:

| | EXAMPLE NOS. | | |
|---|---|---|---|
| | 4 | 5 | 6 |
| Barrel Temp., °C | 181 | 181 | 184 |
| Zone 1 | 199 | 200 | 203 |
| Zone 2 | 204 | 203 | 201 |
| Zone 3 | 200 | 194 | 232 |
| Zone 4 | 200 | 250 | |
| Screw Speed, rpm | | | |
| Polymer Feed Rate, lb/hour (kg/h) | 100 (45) | 100 (45) | 200 (90) |
| MAH Feed Rate, lb/hour (kg/h) | 1.9 (0.9) | 1.9 (0.9) | 3.8 (1.7) |
| LUPERSOL Feed Rate, lb/hour (kg/h) | 0.1 (0.05) | 0.25 (0.10) | 0.1 (0.05) |

The vacuum level at zones 3 and 4 was 29.88 inches (75.90 cm) mercury (101.2 kPa). The injection nozzle was arranged as in Example 3 above.

The resulting graft copolymers exhibited the properties summarized in Table I.

**TABLE I**

| | EXAMPLE NOS. | | |
|---|---|---|---|
| | 4 | 5 | 6 |
| Melt Flowability | 5.2 | 0.9 | 8.2 |
| MAH Incorporation (% by wt) | 0.98 | 1.20 | 1.11 |
| MAH Conversion (% by wt) | 51.5 | 53.7 | 58.4 |
| Whiteness Index | 37.12 | -9.56 | 42.36 |
| Yellowness Index (A) | 12.78 | 28.22 | 1.13 |
| Yellowness Index (B) | 13.34 | 30.31 | 11.59 |

### (Comparative) Example 7

This example illustrates the importance in the design of the screw elements cf the extruder.

A twin screw extruder similar to that of Example 1 was used except that the negative conveyance element was replaced by a positive conveyance element. (As a result. the extruder was not polymer filled or pressurized at the injection point.) A vacuum level of 29 inches (74 cm) of mercury (98.2 kPa) was maintained on zones 3 and 4 to devolatilize the graft copolymer.

Into zone 2 of the extruder were added MAH, LUPERSOL 130 and methyl ethyl ketone (MEK). The operating conditions of the extruder were:

| Zone No | 1 | 2 | 3 | 4 |
|---|---|---|---|---|
| Barrel Temp., °C | 85 | 119 | 192 | 192 |
| Screw Speed 200 rpm | 300 | | | |
| MAH Feed Rate | 3.7 lb/hr. (1.7 kg/h) | | | |
| MEK Feed Rate | 3.7 lb/hr. (1.7 kg/h) | | | |
| LUPERSOL Feed Rate | 0.11 lb/hr. (0.05 kg/h) | | | |

DOW HDPE 10062 was fed into the extruder at a rate of 200 pounds per hour (90 kg/h).

Properties of the resulting graft copolymers were:

**TABLE I**

| | |
|---|---|
| Melt Flowability | 15.4 |
| MAH Conversion (% by wt) | 17.3 |
| MAH Incorporation (% by wt) | 0.32 |
| Whiteness Index | 56.84 |
| Yellowness Index (A) | 6.28 |
| Yellowness Index (B) | 7.10 |

Additionally, this graft copolymer had an unacceptably strong, unpleasant odor due to residual monomer.

### Examples 8-12

158 grams of the products obtained in Example 3 and Comparative Examples 4-7 above were melt blended with 1242 grams of DOWLEX⁴ LLDPE 4035 using a three zone, one-inch (2.5 cm) single screw extruder with a length/diameter ratio of 24:1, barrel temperature of 325°F (163°C) in Zone 1 and 375°F (191°C) in zones 2 and 3. The resulting pellets were then fed to a three-quarter inch (1.9 cm) Killion single screw blown film extruder having a barrel temperature in zones 1 and 2 of 300°F (149°C) and 375°F (191°C) respectively, and 375°F (191°C) in die zones 1 and 2. A frostline of three inches (7.6 cm) was maintained in each case. The extruded monolayer film had a final maleic anhydride comonomer content of 0.13% by weight.
4 A trademark of The Dow Chemical Company, DOWLEX LLDPE 4035 is a linear low density polyethylene (LLDPE) having a melt index of 5.5 dg/min and a density of 0.919 g/cc.

An 8 inch (20 cm) wide film having a thickness of 1.6 mils (40 µm) of each of Example 3 and Comparative Examples 4-7 (C. 4-7) was placed on a light box. A 1.5 inch (3.8 cm) x 0.5 inch (1.3 cm) template was placed over the film. The number of grains having a diameter between 5 and 15 mils (125-375 µm) within the template area under a 10 fold magnification lamp (Art Specialty Co., Chicago, Illinois) were then determined. The results, tabulated below, are expressed in units of number of grains per 1.000 square inches of 1.6 mil (40 µm) film.

| EXAMPLE NO | | | | |
|---|---|---|---|---|
| 3 | C.4 | C.5 | C.6 | C.7 |
| 2,773 | 8,107 | 15,819 | 4,053 | * |

| | | | | |
|---|---|---|---|---|
| *Could not be made into films using blend levels which give a maleic anhydride content suitable for adhesive performance. | | | | |

### (Comparative) Example 13

This example demonstrates that less conversion is obtained when the maleic anhydride (MAH) grafting monomer is fed to the extruder premixed (Sample A), concurrently (Sample B) or in the conventional feed ports (Sample C) than the embodiments of this invention (in particular as illustrated in Examples 1-3).

### Sample A

Into the extruder of Example 1 was fed a mixture of maleic anhydride and dicumyl peroxide (10:1 weight ratio, respectively). The mixture was dissolved in acetone and sprayed on pellets of high density polyethylene (HDPE). The acetone was evaporated, and the coated pellets were fed as a concentrate into the suction of the extruder, along with virgin pellets to feed a 97.8% polymer/2% maleic anhydride/0.2% dicumyl peroxide mixture. Devolatilization was performed in Zone 3. Data is provided in Table II.

### Sample B

A maleic anhydride concentrate in a 25 melt index linear low density polyethylene (LLDPE) was made on a Banbury mixer, and subsequently granulated. The concentrate contained 10 maleic anhydride. A dry blend of this concentrate with dicumyl peroxide powder was made, and the concentrate fed to the extruder of Example 1 along with virgin polyethylene to give a feed ratio of 97.91 polymer/1.9% maleic anhydride/0.19 dicumyl peroxide. Data is provided in Table II. Additionally, these copolymers had an unacceptable odor for use as a food packaging component.

**TABLE II**

| PHR (KHR) MAH | PHR (KHR) Peroxide | %MAH Grafted | % Conversion | Polymer | Sample |
|---|---|---|---|---|---|
| 2.2 (1.0) | 0.2 (0.09) | 0.60 | 27.3 | HDPE | A |
| 1.9 (0.85) | 0.2 (0.09) | 0.52 | 27.4 | LDPE | B |
| PHR = Pounds per one hundred rate (of polymer) KHR = Kilograms per one hundred rate (of polymer) | | | | | |

### Sample C

The extruder of Example 1 was employed except that maleic anhydride (MAH) and peroxide dissolved in methyl ethyl ketone (MEK) at a weight ratio of 59/3/38, (MAH/peroxide/MEK) was injected into Zone 2 via a tube fitted into a plate from which was attached a metal plug, normally used to contour the shape of the twin screws to eliminate some of the air in the extruder and act as part of the barrel. Polymer was fed Into the suction of the extruder. At the point where the solution was introduced, the polymer was molten. The solvent and unreacted monomer was vacuum devolatilized in Zone 3 and 4. Pertinent data is provided in Table III. Note that these copolymers had an unacceptable odor for use in a food packaging component.

**TABLE III**

| GRAFTING MALEIC ANHYDRIDE BY SAMPLE C METHOD | | | | |
|---|---|---|---|---|
| PHR (KHR) MAH | PHR (KHR) Peroxide | %MAH Grafted | % Conversion | Polymer |
| 2 (0.9) | 0.1² (0.05) | 0.16 | 8 | HDPE |
| 2 (0.9) | 0.1³ (0.05) | 0.11 | 5.5 | HDPE |
| 2 (0.9) | 0.1² (0.05) | 0.58 | 29 | LLDPE |
| 2 (0.9) | 0.1² (0.05) | 0.44 | 22 | LLDPE |
| 2 (0.9) | 0.1² (0.05) | 0.37 | 18.5 | LLDPE |
| 2 (0.9) | 0.1² (0.05) | 0.82 | 41 | LLDPE |
| 2 (0.9) | 0.1² (0.05) | 0.48 | 24 | LLDPE |
| PHR = Pounds per one hundred rate (of polymer) KHR = Kilograms per one hundred rate (of polymer) | | | | |

| | | | | |
|---|---|---|---|---|
| ² Dicumyl Peroxide | | | | |
| ³ t-Butylhydroperoxide ⁴ Lupersol 130 | | | | |

## Claims

1. A method for grafting maleic anhydride to polymers, including the steps of:
(a) feeding the polymer, maleic anhydride and a free radical initiator to a multiple screw extruder;
(b) melting the polymer by heating and shearing in the extruder; and
(c) thereafter mixing the molten polymer and maleic anhydride in the extruder for sufficient time to graft at least part of the maleic anhydride to the molten polymer;
characterised in that the maleic anhydride and free radical initiator are injected into a section of the multiple screw extruder which is pressurized and wherein the flights of the screw and substantially all voids in the section are filled with molten polymer.

2. A method as claimed in Claim 1, wherein the maleic anhydride and the free radical initiator are mixed in a solvent system prior to injection into the extruder, and wherein the extruder is a co-rotating, twin screw, extruder.

3. A method as claimed in Claim 2, wherein the maleic anhydride and the free radical initiator are mixed within a ketone prior to injection.

4. A method as claimed in Claim 3, wherein the ketone is selected from methyl ethyl ketone and acetone.

5. A method as claimed in any one of the preceding claims, wherein the extruder predominantly contains positive conveyance elements, and the polymer filled, pressurized section of the extruder contains a series of mixing type elements that are backed by a negative conveyance element.

6. A method as claimed in any one of the preceding claims, wherein the maleic anhydride is injected into the extruder in an area maintained at a pressure of 350 to 700 kPag (50-100 psig).

7. A method as claimed in any one of the preceding claims, further comprising the step of devolatilizing the polymer in at least one decompression zone of the extruder.

8. A method as claimed in Claim 7, wherein said decompression zone is maintained at a temperature of 180°C to 260°C.

9. A method as claimed in any one of the preceding claims, wherein the ratio of maleic anhydride to polymer feed is such as to incorporate 0.3 to 1.5% by weight maleic anhydride into the polymer.

10. A method as claimed in any one of the preceding claims, wherein the ratio of maleic anhydride to polymer feed is such as to incorporate more than 0,50% by weight maleic anhydride into the polymer.

11. A method as claimed in any one of the preceding claims, wherein said polymer is an olefinic polymer selected from high density polyethylene, low density polyethylene, and copolymers of ethylene and a C₃ to C₁₀ olefin.

12. A method as claimed in Claim 11, wherein the polymer is a high density polyethylene resin or a linear low density copolymer of ethylene and 1-octene.

13. A method as claimed in any one of Claims 1 to 10, wherein said polymer is polypropylene or poly(4-methylpentene).

14. A method as claimed in any one of Claims 1 to 10, wherein said polymer is a copolymer of ethylene and a member selected from methacrylic acid, ethyl acrylate, butyl acrylate, methyl methacrylate, methyl acrylate and vinyl acetate.

15. A method as claimed in any one of Claims 1 to 10, wherein said polymer is a copolymer of ethylene and either acrylic acid or carbon monoxide.

16. A method as claimed in any one of the preceding claims, wherein said free radical initiator is an alkyl or dialkyl peroxide.

17. A graft copolymer composition comprising the reaction product of maleic anhydride and a backbone polymer in the presence of an alkyl or dialkyl peroxide as free radical initiator and having a Yellowness Index as measured according to ASTM D-1925 of less than 10.0, characterized in that between 0.50 and 2.0 weight percent of said graft copolymer comprises maleic anhydride and the composition is obtainable by a method as defined in Claim 1.

18. A graft copolymer composition as claimed in Claim 17, wherein said yellowness index is less than 8.75.

19. A graft copolymer composition as claimed in Claim 17 or Claim 18, wherein the whiteness index as measured according to ASTM E-313-73 is greater than 45.0.

20. A multilayer film containing at least two layers wherein at least one of said layers comprises a blend of:
(a) a composition as defined in Claim 16; and
(b) between 25.0 to 98.5 weight percent polyolefin.

21. A film as claimed in Claim 20, wherein said polyolefin is selected from polyethylene, polypropylene, poly(4-methylpentene), copolymers of ethylene and a C₃ to C₁₀ α-olefin, copolymers of ethylene and a C₄-C₈ diolefin and copolymers of ethylene and an ethylenically unsaturated carboxylic acid or derivative and copolymers of ethylene and carbon monoxide.

22. A film as claimed in Claim 21, wherein said polyethylene is selected from low density polyethylene, high density polyethylene, and linear low density polyethylene.

23. A film as claimed in any one of Claims 20 to 22, wherein the grain count of diameter size between 125 and 375 µm (5 and 15 mils) of said blend is less than 3,000 grains per 6500 cm² (1,000 square inches) of 40 µm (1.6 mil) film.

24. A film as claimed in any one of Claims 20 to 23, wherein the ratio of said graft copolymer to said polyolefin is 5.0:95 to 25:75 by weight.

## Patentansprüche

1. Verfahren zum Aufpfropfen von Maleinsäureanhydrid auf Polymere, umfassend die Schritte:
(a) Zuführen des Polymers, des Maleinsäureanhydrids und eines radikalischen Initiators in einen Mehrschneckenextruder;
(b) Schmelzen des Polymers durch Erwärmen und Scheren im Extruder; und
(c) danach Mischen des geschmolzenen Polymers und des Maleinsäureanhydrids im Extruder für einen ausreichenden Zeitraum, um mindestens einen Teil des Maleinsäureanhydrids auf das geschmolzene Polymer aufzupfropfen;
dadurch gekennzeichnet,
daß das Maleinsäureanhydrid und der radikalische Initiator in einen Abschnitt des Mehrschneckenextruders, der unter Druck steht und worin die Schneckengänge und im wesentlichen alle Leerräume im Abschnitt mit geschmolzenem Polymer gefüllt sind, eingespritzt werden.

2. Verfahren nach Anspruch 1, worin das Maleinsäureanhydrid und der radikalische Initiator vor Einspritzen in den Extruder in einem Lösungsmittelsystem gemischt werden und worin der Extruder ein korotierender Doppelschneckenextruder ist.

3. Verfahren nach Anspruch 2, worin das Maleinsäureanhydrid und der radikalische Initiator vor Einspritzung in einem Keton gemischt werden.

4. Verfahren nach Anspruch 3, worin das Keton ausgewählt wird aus Methylethylketon und Aceton.

5. Verfahren nach einem der vorhergehenden Ansprüche, worin der Extruder vorwiegend positive Transportelemente enthält und der mit Polymer gefüllte, unter Druck stehende Abschnitt des Extruders eine Reihe von Elementen vom Mischtyp, die durch negative Transportelemente unterstützt werden, enthält.

6. Verfahren nach einem der vorhergehenden Ansprüche, worin das Maleinsäureanhydrid in einen Bereich in den Extruder eingespritzt wird, der bei einem Druck von 350 bis 700 kPag (50 bis 100 psig) gehalten wird.

7. Verfahren nach einem der vorhergehenden Ansprüche, weiterhin umfassend den Schritt des Entfernens flüchtiger Bestandteile des Polymers in mindestens einer Dekompressionszone des Extruders.

8. Verfahren nach Anspruch 7, worin die Dekompressionszone bei einer Temperatur von 180°C bis 260°C gehalten wird.

9. Verfahren nach einem der vorhergehenden Ansprüche, worin das Verhältnis von Maleinsäureanhydrid zu Polymerzufuhr derart ist, um 0,3 bis 1,5 Gewichtsprozent Maleinsäureanhydrid in das Polymer einzubauen.

10. Verfahren nach einem der vorhergehenden Ansprüche, worin das Verhältnis von Maleinsäureanhydrid zu Polymerzufuhr derart ist, um mehr als 0,50 Gew.-% Maleinsäureanhydrid in das Polymer einzubauen.

11. Verfahren nach einem der vorhergehenden Ansprüche, worin das Polymer ein olefinisches Polymer, ausgewählt aus Polyethylen hoher Dichte, Polyethylen niedriger Dichte und Copolymeren von Ethylen und einem C₃ bis C₁₀ Olefin ausgewählt wird.

12. Verfahren nach Anspruch 11, worin das Polymer ein Harz von Polyethylen hoher Dichte oder ein lineares Copolymer von Ethylen und 1-Octen niedriger Dichte ist.

13. Verfahren nach einem der Ansprüche 1 bis 10, worin das Polymer Polypropylen oder Poly(4-methylpenten) ist.

14. Verfahren nach einem der Ansprüche 1 bis 10, worin das Polymer ein Copolymer von Ethylen und einem Stoff ausgewählt aus Methacrylsäure, Ethylacrylat, Butylacrylat, Methylmethacrylat, Methylacrylat und Vinylacetat ist.

15. Verfahren nach einem der Ansprüche 1 bis 10, worin das Polymer ein Copolymer von Ethylen und entweder Acrylsäure oder Kohlenmonoxid ist.

16. Verfahren nach einem der vorhergehenden Ansprüche, worin der radikalische Initiator ein Alkyl- oder Dialkylperoxid ist.

17. Pfropfcopolymer-Zusammensetzung, umfassend das Reaktionsprodukt von Maleinsäureanhydrid und einem Grundgerüstpolymer in der Gegenwart eines Alkyl- oder Dialkylperoxides als radikalischen Initiator und mit einer Vergilbungszahl von weniger als 10,0 wie gemäß ASTM D-1925 gemessen,
dadurch gekennzeichnet,
daß Maleinsäureanhyrid zwischen 0,50 und 2,0 Gewichtsprozent des Pfropfcopolymers umfaßt und die Zusammensetzung durch ein Verfahren nach Anspruch 1 erhältlich ist.

18. Pfropfcopolymer-Zusammensetzung nach Anspruch 17, worin die Vergilbungszahl weniger als 8,75 beträgt.

19. Pfropfcopolymer-Zusammensetzung nach Anspruch 17 oder Anspruch 18, worin die Weißezahl wie gemessen gemäß ASTM E-313-73 größer als 45,0 ist.

20. Mehrschichtfolie, enthaltend mindestens zwei Schichten, worin mindestens eine der Schichten eine Mischung von:
(a) einer Zusammensetzung nach Anspruch 16; und
(b) zwischen 25,0 und 98,5 Gewichtsprozent Polyolefin umfaßt.

21. Folie nach Anspruch 20, worin das Polyolefin ausgewählt ist aus Polyethylen, Polypropylen, Poly(4-methylpenten), Copolymeren von Ethylen und einem C₃ bis C₁₀ α-Olefin, Copolymeren von Ethylen und einem C₄ bis C₈ Diolefin und Copolymeren von Ethylen und einer ethylenisch ungesättigten Carbonsäure oder einem Derivat davon und Copolymeren von Ethylen und Kohlenmonoxid.

22. Folie nach Anspruch 21, worin das Polyethylen ausgewählt ist aus Polyethylen niedriger Dichte, Polyethylen hoher Dichte und linearem Polyethylen niedriger Dichte.

23. Folie nach einem der Ansprüche 20 bis 22, worin die Kornzahl einer Durchmessergröße zwischen 125 und 375 µm (5 bis 15 Millizoll) der Mischung weniger als 3000 Körner pro 6500 cm² (1000 Quadratzoll) einer 40 µm (1,6 Millizoll) Folie beträgt.

24. Folie nach einem der Ansprüche 20 bis 23, worin das Gewichtsverhältnis von Pfropfcopolymer zu Polyolefin 5,0:95 bis 25:75 beträgt.

## Revendications

1. Procédé pour greffer l'anhydride maléique sur des polymères, qui comprend les étapes de :
(a) alimentation en polymère, en anhydride maléique et en amorceur radicalaire libre, d'une extrudeuse multivis ;
(b) fusion du polymère en chauffant et en cisaillant dans l'extrudeuse ; et
(c) mélangeage ensuite du polymère fondu et de l'anhydride maléique dans l'extrudeuse pendant une durée suffisante pour greffer au moins une partie de l'anhydride maléique sur le polymère fondu ;
caractérisé en ce qu'on injecte l'anhydride maléique et l'amorceur radicalaire libre dans une section de l'extrudeuse multivis qui est pressurisée et, dans laquelle les filets de la vis et pratiquement tous les vides dans la section sont remplis de polymère fondu.

2. Procédé conforme à la revendication 1, dans lequel on mélange l'anhydride maléique et l'amorceur radicalaire libre dans un système de solvants avant l'injection dans l'extrudeuse, et dans lequel l'extrudeuse est une extrudeuse à double vis co-rotatives.

3. Procédé conforme à la revendication 2, dans lequel on mélange l'anhydride maléique et l'amorceur radicalaire libre avec une cétone avant l'injection.

4. Procédé conforme à la revendication 3, dans lequel la cétone est choisie parmi la méthyléthylcétone et l'acétone.

5. Procédé conforme à l'une quelconque des précédentes revendications, dans lequel l'extrudeuse contient d'une manière prédominante des éléments de transport positifs, et la section pressurisée de l'extrudeuse, remplie de polymère, contient une série d'éléments de mélangeage qui s'appuient sur un élément de transport négatif.

6. Procédé conforme à l'une quelconque des précédentes revendications, dans lequel on injecte l'anhydride maléique dans l'extrudeuse dans une aire maintenue sous une pression manométrique de 350 à 700 kPa (50 -100 psig).

7. Procédé conforme à l'une quelconque des précédentes revendications, comprenant en outre l'étape d'élimination des matières volatiles du polymère dans au moins une zone de décompression de l'extrudeuse.

8. Procédé conforme à la revendication 7, dans lequel on maintient ladite zone de décompression à une température comprise entre 180 et 260° C.

9. Procédé conforme à l'une quelconque des précédentes revendications, dans lequel le rapport de l'anhydride maléique au polymère alimenté est tel qu'on introduit 0,3 à 1,5 % en poids d'anhydride maléique dans le polymère.

10. Procédé conforme à l'une quelconque des précédentes revendications, dans lequel le rapport de l'anhydride maléique au polymère alimenté est tel qu'on introduit plus de 0,50 % en poids d'anhydride maléique dans le polymère.

11. Polymère conforme à l'une quelconque des précédentes revendications, dans lequel ledit polymère est un polymère oléfinique choisi parmi le polyéthylène haute densité, le polyéthylène basse densité, et des copolymères d'éthylène et d'une oléfine en C₃ - C₁₀.

12. Procédé conforme à la revendication 11, dans lequel le polymère est une résine polyéthylène haute densité ou un copolymère linéaire basse densité d'éthylène et de 1-octène.

13. Procédé conforme à l'une quelconque des revendications 1 à 10, dans lequel ledit polymère est le polypropylène ou poly(4-méthylpentène).

14. Procédé conforme à l'une quelconque des revendications 1 à 10, dans lequel ledit polymère est un copolymère d'éthylène et d'un élément choisi parmi l'acide méthacrylique, l'acrylate d'éthyle, l'acrylate de butyle, le méthacrylate de méthyle, l'acrylate de méthyle et l'acétate de vinyle.

15. Procédé conforme à l'une quelconque des revendications 1 à 10, dans lequel ledit polymère est un copolymère d'éthylène et de, soit l'acide acrylique soit le monoxyde de carbone.

16. Procédé conforme à l'une quelconque des précédentes revendications, dans lequel ledit amorceur radicalaire libre est un peroxyde d'alkyle ou de dialkyle.

17. Composition copolymère de greffage comprenant le produit réactionnel de l'anhydride maléique et d'un squelette polymère en présence d'un peroxyde d'alkyle ou de dialkyle en tant qu'amorceur radicalaire libre et présentant un Indice de Jaune, tel que mesuré conformément à la norme ASTM D- 1925, inférieur à 10,0, caractérisé en ce qu'entre 0,50 et 2,0 % en poids dudit copolymère de greffage comprend l'anhydride maléique et la composition peut être obtenue au moyen d'un procédé conforme à la revendication 1.

18. Composition copolymère de greffage conforme à la revendication 17, dans laquelle ledit Indice de Jaune est inférieur à 8,7-5.

19. Composition copolymère de greffage conforme à la revendication 17 ou 18, dans laquelle l'indice de blancheur, tel que mesuré selon la norme ASTM E-313-73, est supérieur à 45,0.

20. Film multicouche contenant au moins deux couches, dans lequel au moins une desdites couches comprend une combinaison constituée par :
(a) une composition conforme à la revendication 16 ; et
(b) de 25,0 à 98,5 % en poids de polyoléfine.

21. Film conforme à la revendication 20, dans lequel ladite polyoléfine est choisie parmi le polyéthylène, le polypropylène, le poly(4-méthylpentène), des copolymères d'éthylène et d'une α-oléfine en C₃-C₁₀, des copolymères d'éthylène et d'une dioléfine en C₄-C₈ et des copolymères d'éthylène et d'un acide carboxylique à insaturations éthyléniques ou d'un dérivé de ce dernier, et des copolymères d'éthylène et de monoxyde de carbone.

22. Film conforme à la revendication 21, dans lequel ledit polyéthylène est choisi parmi le polyéthylène basse densité, le polyéthylène haute densité et le polyéthylène basse densité linéaire.

23. Film conforme à l'une quelconque des revendications 20 à 22, dans lequel le nombre de grains de diamètre compris entre 125 et 375 µm (5 et 15 mils) de ladite combinaison est inférieur à 3000 grains pour 6500 cm² (1000 pouces au carré) d'un film de 40 µm (1,6 mil).

24. Film conforme à l'une quelconque des revendications 20 à 23, dans lequel le rapport dudit copolymère de greffage à ladite polyoléfine est compris entre 5,0:95 et 25:75 en poids.
